# EUROPEAN PATENT APPLICATION

(11) **EP 4 451 148 A1**
(43) Date of publication of application: **23.10.2024**
(21) Application number: 24169232.6
(22) Date of filing: 09.04.2024
(51) Int. Cl.: G06F 21/31, G06F 21/32, G06V 20/59, G06V 40/16, B60N 2/00, B60R 16/037

(54) **BIOMETRIC RECOGNITION ACROSS DISTRIBUTED ASSETS**

(30) Priority: 20.04.2023 US 202363460646 P
(71) Applicant: Cerence Operating Company, Burlington, MA 01803 (US)
(72) Inventor: KANE, Marc, Burlington, MA, 01803 (US); RUBIN, Brian, Burlington, MA, 01803 (US)
(74) Representative: Schwenderling, Jens

(57) **Abstract**

A method includes customizing interaction of a person with a vehicle from a fleet of vehicles by receiving, from an access controller in the vehicle, biometric data, the biometric data having been acquired from the person; using the biometric data, retrieving a profile for the person; and providing the profile to the vehicle. This enables the vehicle to transition into, or be reconfigured into, a state that enables the person to interact with the vehicle in a manner based on the profile.

## Description

### Background

There exist cases in which one has multiple assets distributed across space. An example of such a case is a rental car business or car-sharing service in which one has assets (i.e., cars) that are disposed at various locations. An inherent aspect of such a business is that of providing access to one but not all of those assets.

In a conventional method, the customer comes to a central office, fills out paperwork, and receives a key. At the central office, one can inspect a driver's license and confirm the driver's identity. Although this method is simple and secure, it does have a disadvantage, namely the inconvenience of having to maintain a central repository of vehicles.

In another conventional method, which is widespread in the car sharing industry, a customer has an access card that establishes wireless communication with a vehicle. In such cases, the vehicle communicates with a central server to confirm that access is authorized and unlocks itself if it is appropriate to do so. This eliminates the need for a central repository of cars and permits distribution of cars over a wide area.

On the other hand, anybody can hold the access card. Thus, there is no way to tell if the person driving the car is the same person who was granted permission to drive the car.

### Summary

The invention provides a way to remotely grant access to one of a plurality of assets in a way that provides some assurance that the person receiving access is the same person to whom access was granted.

In one aspect, the invention features a method that includes customizing a person's interaction with a vehicle from a fleet of vehicles. In such a method, customizing the interaction comprises receiving, from an access controller in the vehicle, biometric data, the biometric data having been acquired from the person; using the biometric data, retrieving a profile for the person; and providing the profile to the vehicle. This enables the vehicle to transition into, or be reconfigured into, a state that enables the person to interact with the vehicle in a manner based on the profile.

In some practices, identifying the person comprises obtaining reference data for comparison with the test data. This reference data comprises information indicative of facial features of the person. Among these practices are those in which the reference data is data that was provided by the person during an enrollment process. Also among these practices of the method are those in which the reference data is data that has been obtained by the cloud service from publicly available images of the person.

Further practices include those in which receiving the test data comprises receiving test data that is based on an image of the person that was obtained by an internal camera of the vehicle while the person was inside the vehicle, those in which receiving the test data comprises receiving test data that is based on an image of the person that was obtained by an external camera of the vehicle while the person was outside the vehicle, and those in which receiving test data that is based on an image of the person that was obtained by an external camera of the vehicle while the person was approaching the vehicle.

Still other practices include those in which receiving the test data is not carried out by the vehicle. Among these are practices in which receiving the test data comprises receiving test data that is based on an image of the person that was obtained by a camera of a smartphone. In such cases, the image is typically one that was acquired as a result of a photograph taken of the person by using the smartphone, for example by using the smartphone to take a selfie.

Further practices include those in which, after the person has been identified, the seating within the vehicle is adjusted based on the profile. These include one or more of adjusting the seat's height, its position along the vehicle's longitudinal axis, and the seat back's angle.

Also among the practices are those in which, after the person has been identified, various settings in an infotainment system of the vehicle are based on the profile. These include such adjustments as resetting stored radio stations or including preferred audio settings for such parameters as treble or bass.

Still other practices include those in which a person uses the same profile in two different vehicles from a fleet. In such practices, the vehicle is a first vehicle of a fleet that comprises a second vehicle. Such practices include receiving, from an access controller in the second vehicle, test data, the test data being representative of an image of the person's face, using the test data, identifying the person, after having identified the person, retrieving a profile for the person and providing the profile to the second vehicle. This enables the second vehicle to be configured based on the profile. As a result, both the second vehicle and the first vehicle are able to be configured based on the same profile.

Still other practices include customizing interaction of the vehicle with a companion of the person.

Also among the practices are those that include receiving, from the access controller, biometric data acquired from a companion of the person. In such cases, the profile is a composite profile that includes a profile of the person and a profile of the companion. Providing the profile to the vehicle enables the companion to interact with the vehicle in a manner based on the profile of the companion.

Still other practices include, based on information in the profile, customizing a spoken greeting and causing the vehicle to deliver the customized spoken greeting.

In another aspect, the invention features a cloud service that is in communication with each vehicle in a fleet of vehicles. Each of the vehicles has an access controller that receives biometric information. The cloud service comprises a database of profiles and a profile manager. Each of the profiles comprises a profile of a person and includes information for customizing interaction between the person and any vehicle in the fleet of vehicles. The profile manager receives, from an access controller of a vehicle in the fleet, information indicating presence of the person at the vehicle, the presence having been determined based on inspection of biometric data obtained from the person. The profile manager then retrieves a profile of the person and provides the profile to the vehicle. This enables the vehicle to transition into a state that enables the person to interact with the vehicle in a manner based on the profile.

In some embodiments, the cloud service further comprises a proactive engine that receives information from the profile manager and uses that information to customize spoken interaction with the person in the vehicle.

In other embodiments, the profiles include a composite profile that includes information that enables customizing interaction of a companion to said person with said vehicle from said fleet of vehicles.

Within the claims, the terms "method" and "apparatus" shall be construed to mean a "non-abstract method" and a "non-abstract apparatus," respectively. The claims are not intended to cover any "abstract" method and "abstract" apparatus. Any person who construes the claims as covering abstract subject matter would therefore be demonstrating the ability to construe the claims contrary to the specification.

As used herein, the term "non-abstract" shall be construed to mean the complement of "abstract" as that term has been defined by the U.S. Supreme Court and the Federal Circuit as of the filing date of this application.

These and other features of the invention will be apparent from the following detailed description and the accompanying figures, in which:

### Description of Drawings

FIG. 1 shows a fleet of vehicles, each equipped to receive biometric data and to communicate with a cloud service.
FIG. 2 shows details of a vehicle from the fleet shown in FIG. 1.
FIG. 3 shows details of the cloud service and the head unit shown in FIG. 2.

### Detailed Description

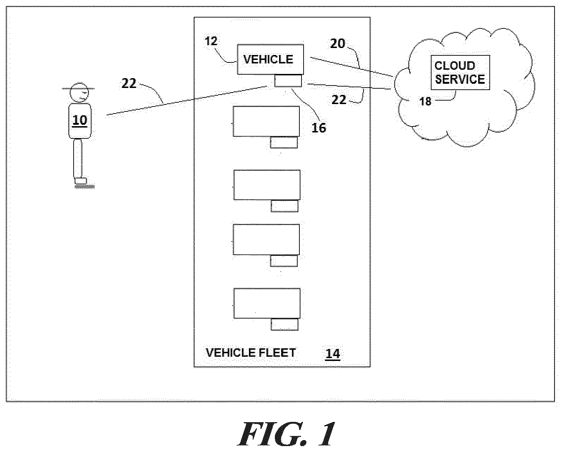

FIG. 1 shows a person **10** who seeks access to a vehicle **12** that is one of several vehicles in a vehicle fleet **14.** Each vehicle **12** includes a biometric sensor **16.** The vehicles are all in communication with a cloud service **18** that provides an access signal **20** to a vehicle **10** based in part on biometric data **22** received by the biometric sensor **16** at that vehicle **10.** The cloud service **18** comprises one or more cloud servers.

In the illustrated embodiment, the biometric sensor **16** is configured to receive biometric data **22** from the person **10** while the person **10** stands outside the vehicle **12.** This is useful for embodiments in which the vehicle **10** is kept locked. In other embodiments, the biometric sensor **16** is instead disposed to receive biometric data **22** from a person **10** who is already seated within the vehicle **12.** This allows the person **10** to be sheltered from the elements during the authentication process.

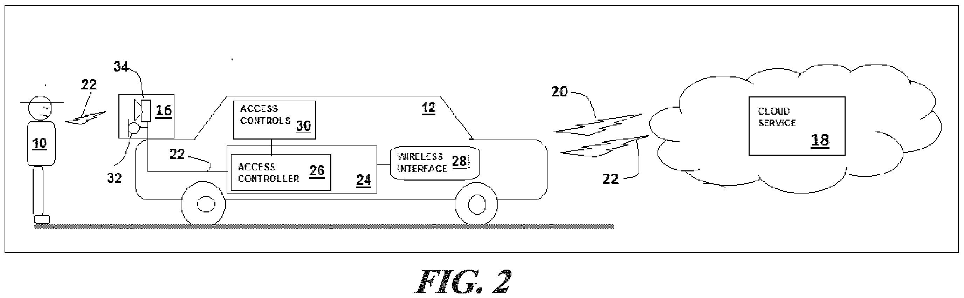

As shown in FIG. 2, a typical vehicle **10** includes a head unit **24** that executes certain applications. Among these applications is an access controller **26** that receives biometric data **22** from the biometric sensor **16** and that also communicates with the cloud service **18** via a wireless interface **28.** When deemed appropriate, the access controller **26** also sends signals to access controls **30** to permit the vehicle **10** to be unlocked and/or started.

The biometric sensor **16** shown in FIG. 2 features the combination of a microphone **32** and a camera **34.** However, embodiments include those in which the biometric sensor **16** consists of any combination of one or more of a camera **34,** a microphone **32,** a touch sensor for sensing of fingerprints, and an iris sensor that inspects a human iris. Embodiments of a camera **34** include infrared cameras and RGB cameras.

In some embodiments, the biometric sensor **16** is a smartphone carried by the person **10.** This allows controlling access to the vehicle **12** based on biometric data **22** for those cases in which the vehicle **12** lacks any sort of biometric sensor **16** but nevertheless is able to provide its location to the cloud service **18** using the wireless interface **24.**

In a typical case, the person's smartphone also has a location sensor and biometric sensor **16** (such as a camera or microphone). For the case in which face recognition is used, the person **10** provides biometric data **22** by taking a selfie and providing that selfie, along with the smartphone's location information, to the cloud service **18.**

The cloud service **18** obtains the vehicle's location information and correlates it with the location information of the smartphone. From this, the cloud service **18** infers which vehicle **12** in the fleet **14** the person **10** seeks to access. The cloud service **18** then inspects the biometric data **22** in the selfie and renders an appropriate judgment to provide to the access controller **26.**

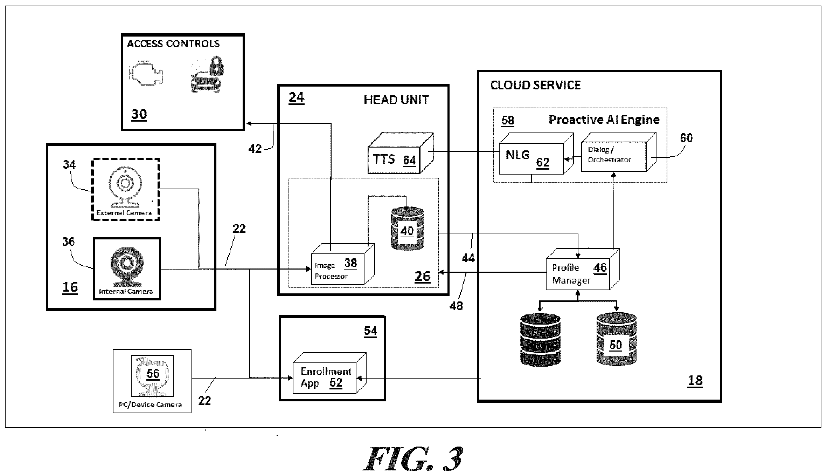

FIG. 3 shows details of the cloud service **18,** the access controller **26,** and the access controls **30,** all of which are shown in FIG. 2. In addition, the embodiment shown in FIG. 3 has, as its biometric sensor **16,** an external camera **34** and an internal camera **36.** The internal camera **36** is useful for access control when the car is unlocked. In such cases, a person **10** to be identified sits in the vehicle within the internal camera's field of view. The internal camera **36** then collects the relevant biometric data **22.**

The access controller **26** features an image processor **38** in communication with a local database **40.** The image processor **38** receives biometric data **22** and extracts relevant features for comparison against feature sets in the local database **40.**

The image processor **38** identifies a candidate feature set from the local database **40** and, based on the biometric data **22,** calculates the probability that the person **10** to be identified matches the corresponding data in the candidate feature set. If this probability exceeds a pre-defined value, the access controller **26** transmits two signals: a grant signal **42,** which goes to the access controls **30,** and a profile request **44,** which goes to the cloud service **18.** By choosing the pre-defined value, it is possible to control the probability of incorrectly granting access as well as the probability of incorrectly denying access.

Upon receiving the grant signal **42** from the access controller **26,** the access controls **30** carry out the relevant instruction. Examples of such instructions include unlocking the vehicle's passenger compartment, unlocking the vehicle's trunk, and enabling the engine to be started. The choice of which instruction to carry out depends on details of the grant signal **42.** These details are provided by the access controller **26.**

At the cloud service **18,** a profile manager **46** receives the profile request **44** from the access controller **26** retrieves a profile **48** corresponding to the person **10** from a preference database **50,** and relays the profile **48** back to the access controller **26.** The profile **48** comprises the person's preferences, which can then be used to configure the vehicle **12.** A variety of user preferences are contemplated within the profile **48.** Among these are pre-sets of radio stations, pre-sets of seats and mirrors, stored music or other entertainment media, contacts, and appointments.

The foregoing interaction occurs between the cloud service **18** and any vehicle **12** in the fleet **14.** As a result, the person's preferences become portable. Any vehicle **12** that the person **10** uses will import that person's **10** profile **48,** thereby allowing that vehicle **12** to be customized for that person **10.** Such a system is applicable not only to car sharing services or rental car companies but also for families that own more than one vehicle.

In some embodiments, the act of identifying a person **10** through facial recognition takes place outside the vehicle, using an external camera **34,** either while the person **10** stands near the vehicle **12** or as the person approaches the vehicle **12.** Upon successful facial recognition, the vehicle **12** carries out any one or more of various actions, such as unlocking its doors, unlocking its trunk, turning on an interior light, downloading a profile **48** corresponding to that person **10,** or playing a suitable welcoming prompt via a speech interface.

In other embodiments, the act of identifying the person **10** through facial recognition takes place inside the vehicle using the internal camera **36.** Such embodiments include those in which the access controller **26,** upon recognizing the person **10,** unlocks or even starts the engine and those in which the access controller **26,** upon failing to recognize the person **10,** immobilizes the vehicle **10** and, optionally, sends a message to the vehicle registered owner or driver.

The act of recognizing the person **10** requires information that correlates an observed biometric feature, such as a face, with an identity. The access controller **26** has at least two options for acquiring such information: using information provided by prior enrollment by the person **10** and using publicly available information.

In a first option, a person **10** who wishes to access vehicles **12** in the fleet **14** enrolls with the fleet's proprietor to gain such access. As part of the enrollment process, that person **10** provides biometric data **22** as part of a registration process.

The enrollment process is one that can be carried out remotely. This procedure, which is sometimes referred to as "digital onboarding," relies on execution of an enrollment application **52** on an enrollment machine **54.**

The enrollment application **52** collects relevant information and transmits it to the cloud service **18.** Since the relevant information includes biometric data **22,** it is particularly useful for the enrollment machine **54** to have a biometric input, such as a camera **56,** for recording the person's face for facial recognition, or a microphone, for recording a sample of the person's voice for use as a voiceprint.

In the illustrated embodiment, the enrollment machine **54** is a device that is separate from the vehicle **12.** An enrollment machine **54** of this type communicates directly with the cloud service **18.** As a result, it is possible to carry out the enrollment process without having to access the vehicle **12.** Examples of such an enrollment machine **54** includes a personal computer, a smartphone, and a tablet.

In those cases in which enrollment is carried out remotely from any vehicle **12,** the biometric data obtained during enrollment will be at the cloud service **18.** This biometric data would have to find its way to the local database **40** of the relevant vehicle **12.** In the context of a vehicle fleet **14,** one would expect a particular vehicle **12** in the fleet **14** to be assigned to the user **10.** In such cases, the act of assigning a vehicle **12** to a user **10** would include having the cloud service **18** transfer appropriate biometric data to that vehicle's local database **40.** As a result, when the user **10** approaches that vehicle **10,** the biometric data will be available to the access controller **26.**

In other embodiments, the head unit **24** itself executes the enrollment application **52.** In such embodiments, enrollment requires the user **10** to access the vehicle **12.**

In still other embodiments, the enrollment process includes cooperation between the head unit **24** and a device that is separate from the vehicle **12.** Examples of such devices include a personal computer, a smartphone, and a tablet.

In a second option, the access controller **26** instead relies on publicly available information. Many publicly available sites have images of people's faces. Examples of such sites include "LINKEDIN(R)" and "FACEBOOK(R)." In such cases, the internal camera **36** acquires an image and the access controller **26** sends a signal to the cloud service **18** requesting a match.

The cloud service **18** further includes a proactive engine **58** that includes a dialog orchestrator **60** in communication with a natural language generator **62.** The dialog orchestrator **60** receives information from the profile manager **46** concerning the relevant profile **48** and details of the profile request **44.** Based on this information, the dialog orchestrator **60** causes the natural language generator **62** to deliver an appropriate message to a text-to-speech module **64** within the head unit **24** for delivery within the vehicle **12.**

In some cases, the enrollment process includes enrolling a set of people. The resulting "enrollment set" includes the user **10** as well as one or more other persons who are authorized to use the vehicle **12** or who are expected to occasionally ride in the vehicle **12.** Examples of such persons include members of the user's family, including children of the user **10.** The resulting profile **48** in such cases includes preferences for each person in the enrollment set. Such a profile **48** is therefore a "composite" profile **48.**

Information available in the profile request **46** includes information concerning the presence of any person who is in the enrollment set. Since the profile **48** includes preferences for each person in the enrollment set, it becomes possible to customize the vehicle **12** to accommodate the preferences of all persons who are identified in the profile request **46** as being members of the enrollment set. This makes it possible to also set preferences not only for the user **10** but for anyone else in the enrollment set who happens to be accompanying the user **10.** Such preferences include all of the preferences as described above in connection with the user **10.** In addition, such information makes it possible for the proactive engine **58** to customize a welcome message so that it recognizes the existence of the user's companion with a suitable greeting.

In the case of seat adjustment, it is useful to know, for each person in the enrollment set, where that person will be sitting. In a vehicle **12** equipped with external cameras **34,** it is possible to observe the trajectories of the individual persons as they approach the vehicle **12** and make their way to individual doors of the vehicle **12.** This provides some basis for proactively determining which seats to adjust and how to adjust them.

Having described the invention and a preferred embodiment thereof, what is claimed as new and secured by letters patent is:

## Claims

1. A method comprising customizing interaction of a person with a vehicle from a fleet of vehicles, wherein customizing said interaction comprises
receiving, from an access controller in said vehicle, biometric data, said biometric data having been acquired from said person,
using said biometric data, retrieving a profile for said person, and
providing said profile to said vehicle, thereby enabling said vehicle to transition into a state that enables said person to interact with said vehicle in a manner based on said profile.

2. The method of claim **1,** wherein identifying said person comprises obtaining reference data for comparison with said test data, wherein said reference data comprises information indicative of facial features of said person,
said reference data having been provided by said person during an enrollment process.

3. The method of claim **1,** wherein identifying said person comprises obtaining reference data for comparison with said test data, wherein said reference data comprises information indicative of facial features of said person,
said reference data having been obtained by said cloud service from publicly available images of said person.

4. The method of claim **1,** wherein receiving said test data comprises receiving test data that is based on an image of said person that was obtained by an internal camera of said vehicle while said person was inside said vehicle.

5. The method of claim **1,** wherein receiving said test data comprises receiving test data that is based on an image of said person that was obtained by an external camera of said vehicle while said person was outside said vehicle.

6. The method of claim **1,** wherein receiving said test data comprises receiving test data that is based on an image of said person that was obtained by an external camera of said vehicle while said person was approaching said vehicle.

7. The method of claim **1,** wherein receiving said test data comprises receiving test data that is based on an image of said person that was obtained by a camera of a smartphone.

8. The method of claim **1,** further comprising, after said person has been identified, adjusting seating in said vehicle based on said profile.

9. The method of claim **1,** further comprising, after said person has been identified, adjusting settings in an infotainment system of said vehicle based on said profile.

10. The method of claim **1,** wherein said vehicle is a first vehicle of a fleet that comprises a second vehicle, wherein said method further comprises receiving, from an access controller in said second vehicle, test data, said test data being representative of an image of said person's face, using said test data, identifying said person, after having identified said person, retrieving a profile for said person and providing said profile to said second vehicle, thereby enabling said second vehicle to be configured based on said profile, wherein said second vehicle and said first vehicle are configured based on said profile.

11. The method of claim 1, further comprising customizing interaction of said vehicle with a companion of said person.

12. The method of claim 1, further comprising receiving, from said access controller, biometric data acquired from a companion of said person, wherein said profile is a composite profile that includes a profile of said person and a profile of said companion, and wherein providing said profile to said vehicle enables said companion to interact with said vehicle in a manner based on said profile of said companion.

13. The method of claim 1, further comprising, based on information in said profile, customizing a spoken greeting and causing said vehicle to deliver said spoken greeting.

14. An apparatus comprising a cloud service that is in communication with each vehicle in a fleet of vehicles, each of which comprises an access controller that receives biometric information, wherein said cloud service comprises a database of profiles and a profile manager, wherein each of said profiles comprises a profile of a person, wherein each of said profiles includes information for customizing interaction between said person and any vehicle in said fleet of vehicles, wherein said profile manager receives, from an access controller of a vehicle in said fleet, information indicating presence of said person at said vehicle, said presence having been determined based on inspection of biometric data obtained from said person, wherein said profile manager retrieves said profile of said person and provides said profile to said vehicle, thereby enabling said vehicle to transition into a state that enables said person to interact with said vehicle in a manner based on said profile.

15. The apparatus of claim 14, wherein said cloud service further comprises a proactive engine that receives information from said profile manager and uses said information to customize spoken interaction with said person in said vehicle.

16. The apparatus of claim 14, wherein said profiles comprise a composite profile that includes information that enables customizing interaction of a companion to said person with said vehicle from said fleet of vehicles.
